# EUROPEAN PATENT APPLICATION

(11) **EP 2 315 107 A2**
(43) Date of publication of application: **27.04.2011**
(21) Application number: 10188831.1
(22) Date of filing: 26.10.2010
(51) Int. Cl.: G06F 3/041

(54) **Apparatus and method for reducing electro magnetic interference in mobile terminal**

(30) Priority: 26.10.2009 KR 20090101570
(71) Applicant: SAMSUNG ELECTRONICS CO., LTD., Suwon-si, Gyeonggi-do (KR)
(72) Inventor: Park, Jung-Sik, Seoul (KR); Jhun, Jhae-Kon, Gyeonggi-do (KR)
(74) Representative: Jenkins, Richard Gavin

(57) **Abstract**

An apparatus and a method for dividing a frequency region of a touch screen panel into a plurality of regions and using them in order to reduce an Electro Magnetic Interference (EMI) caused by a frequency of a touch screen panel that occurs in a mobile terminal are provided. The apparatus includes a frequency changing unit. The frequency changing unit divides a frequency region of a touch screen panel into two or more regions, and changes the frequency region of the touch screen panel.

## Description

### BACKGROUND OF THE INVENTION

### 1. Field of the Invention:

The present invention relates to an apparatus and a method regarding a touch screen panel of a mobile terminal. More particularly, the present invention relates to an apparatus and a method for dividing a frequency region of a touch screen panel into a plurality of regions and using them in order to reduce an Electro Magnetic Interference (EMI) caused by a frequency of a touch screen panel that occurs in a mobile terminal.

### 2. Description of the Related Art:

Distribution for mobile terminals has rapidly increased since the mobile terminals provide convenience in portability. Therefore, service providers (i.e., terminal manufacturers) have competitively developed a terminal having more convenient functions in order to attract many users.

For example, the mobile terminals provide functions such as a phonebook, games, a scheduler, a Short Message Service (SMS), a Multimedia Message Service (MMS), a broadcast message service, an Internet service, an Electronic (E)-mail, a morning call, a Motion Picture Expert Group Audio Layer-3 (MP3) player, a digital camera, and the like.

Additionally, a touch screen type mobile terminal which receives data from a user's hand or a stylus pen has been developed, so that the user can write text or draw a line on the mobile terminal easily and conveniently using the stylus pen.

In the above-described touch screen type mobile terminal, an Electro Magnetic Interference (EMI) is generated due to a touch screen panel that generates a frequency of several MHz when power is supplied.

For example, in the case where a multiplied frequency of a frequency of the touch screen panel overlaps a received radio frequency, interference may occur while a user listens to radio broadcast.

To address the above problem, the mobile terminal has resolved an EMI through a Pseudo Random Sequence (PRS) or a Rising/Falling Time control of a frequency source. The above methods transfer a single energy source of a source frequency that generates an EMI to a plurality of frequencies to distribute the energy over an entire band, so that an EMI at a relevant band is reduced. However, since the source frequency is not removed, the EMI exists consistently.

Therefore, to address the above problems, an apparatus and a method for removing a source frequency that generates an EMI in a mobile terminal are required.

### SUMMARY OF THE INVENTION

An aspect of the present invention is to address at least the above-mentioned problems and/or disadvantages and to provide at least the advantages described below. Accordingly, an aspect of the present invention is to provide an apparatus and a method for reducing an Electro Magnetic Interference (EMI) that occurs in a mobile terminal.

Another aspect of the present invention is to provide an apparatus and a method for reducing an EMI by setting a frequency of a touch screen panel of a mobile terminal that is different from a received radio frequency.

Still another aspect of the present invention is to provide an apparatus and a method for dividing a frequency of a touch screen panel into a plurality of regions and using them in a mobile terminal.

In accordance with an aspect of the present invention, an apparatus for reducing an EMI in a mobile terminal is provided. The apparatus includes a frequency changing unit for dividing a frequency region of a touch screen panel into two or more regions, and for changing the frequency region of the touch screen panel.

In accordance with another aspect of the present invention, a method for reducing an EMI in a mobile terminal is provided. The method includes dividing a frequency region of a touch screen panel into two or more regions, and changing the frequency region of the touch screen panel.

In accordance with further another aspect of the present invention, an apparatus for reducing an EMI with respect to a touch input is provided. The apparatus includes a touch panel for dividing a frequency region into a plurality of use frequency bands, and a frequency changing unit for processing a frequency band of the touch panel such that the frequency band of the touch panel does not overlap a frequency band of a peripheral apparatus.

In accordance with yet another aspect of the present invention, a method for reducing an Electro Magnetic Interference (EMI) in a mobile terminal is provided. The method includes determining a frequency region of a touch screen panel based on a frequency used by the touch screen panel, determining if an apparatus using a frequency that interferes with the frequency region is operating, and, if the apparatus using the frequency that interferes with the frequency region is operating, changing the frequency used by the touch screen panel.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings in which:

FIG. 1 is a block diagram illustrating a mobile terminal that removes an Electro Magnetic Interference (EMI) according to an exemplary embodiment of the present invention;

FIG. 2 is a flowchart illustrating a process for removing an EMI in a mobile terminal according to an exemplary embodiment of the present invention;

FIG. 3 is a flowchart illustrating a process for reducing an EMI in a mobile terminal according to an exemplary embodiment of the present invention; and

FIG. 4 is a view illustrating a process for reducing an EMI by changing a frequency of a touch screen panel in a mobile terminal according to an exemplary embodiment of the present invention.

Throughout the drawings, like reference numerals will be understood to refer to like parts, components and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Exemplary embodiments of the present invention provide an apparatus and a method for reducing an Electro Magnetic Interference (EMI) that occurs in a mobile terminal by setting a frequency of a touch screen panel of a mobile terminal that is different from a received radio frequency.

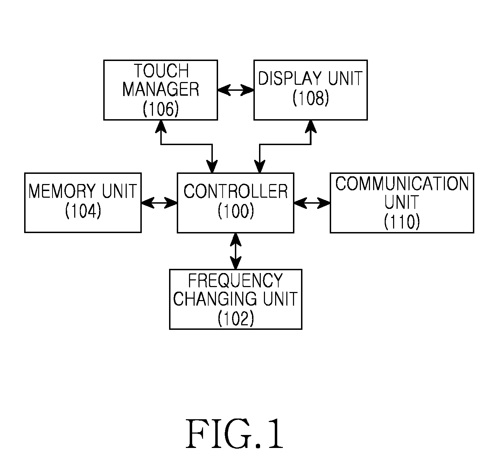

FIG. 1 is a block diagram illustrating a mobile terminal that removes an EMI according to an exemplary embodiment of the present invention.

Referring to FIG. 1, the mobile terminal may include a controller 100, a frequency changing unit 102, a memory unit 104, a touch manager 106, a display unit 108, and a communication unit 110. The mobile terminal may include additional units that are not illustrated here merely for sake of clarity. Similarly, the functionality of two or more of the above units may be integrated into a single component.

First, the controller 100 of the mobile terminal controls an overall operation of the mobile terminal. For example, the controller 100 performs processes and controls for voice communication and data communication. In addition to the general functions, the controller 100 processes to reduce an EMI caused when a multiplied frequency of a frequency generated by the touch manager 106 overlaps a frequency of a radio receiver according to an exemplary embodiment of the present invention. In an exemplary implementation, the controller 100 allows the frequency changing unit 102 to reduce the EMI.

The frequency changing unit 102 divides a region of a frequency used by the touch manager 106 of the mobile terminal into two or more regions. When determining that a region of a frequency used by the touch manager 106 overlaps a region of a frequency of a received radio broadcast, the frequency changing unit 102 sets the frequency used by the touch manager 106 to one of the divided frequency regions that does not overlap the frequency region of the radio broadcast.

That is, the frequency changing unit 102 prevents an EMI from occurring by making the region of the frequency used by the touch manger 106 different from the region of the received radio frequency.

The memory unit 104 includes, for example, Read Only Memory (ROM), Random Access Memory (RAM), flash ROM, and the like. The ROM stores microcode (i.e., code) of programs for processes and controls of the controller 100 and the frequency changing unit 102, and various reference data.

The RAM serves as a working memory of the controller 100 and stores temporary data occurring during execution of various programs. In addition, the flash ROM stores various updatable data for storage such as a phonebook, calling messages, and received messages.

The touch manager 106 detects a user's touch input to perform an operation corresponding to the touch input under control of the controller 100. That is, when the user's touch input occurs, the touch manager 106 provides a position of a relevant point at which the touch input occurs to the controller 100, or the touch manager 106 determines data corresponding to the position of the relevant point and outputs the relevant data to the display unit 108. The touch manager 106 denotes a touch screen panel.

The display unit 108 displays status information generated during an operation of the mobile terminal, a limited number of letters, a large amount of moving images and still images, and the like. The display unit 108 may be a color Liquid Crystal Display (LCD), an Active Mode Organic Light Emitting Diode (AMOLED), and the like. The display unit 108 may have a touch input device. When the display unit 108 having the touch input device is applied to a touch input type mobile terminal, the display unit 108 may serve as an input unit.

The communication unit 110 transmits/receives a Radio Frequency (RF) signal of data input/output via an antenna (not illustrated). For example, during transmission, the communication unit 110 channel-codes and spreads data to be transmitted, and performs an RF process on the signal for transmission of the signal. During reception, the communication unit 110 converts a received RF signal into a baseband signal, and despreads and channel-decodes the baseband signal to recover data.

In an exemplary implementation, the functions of the frequency changing unit 102 may be performed by the controller 100 of the mobile terminal. Separate configuration and illustration of the frequency changing unit 102 are for exemplary purpose only and for convenience in description, and is not for limiting the scope of the present invention. It would be obvious to those skilled in the art that various modifications may be made within the scope of the present invention. For example, all of the functions of the frequency changing unit 102 may be processed by the controller 100.

An exemplary apparatus for reducing an EMI that occurs in a mobile terminal by setting a frequency of a touch screen panel of the mobile terminal that is different from a received radio frequency, has been described above. An exemplary method for reducing an EMI that occurs in a mobile terminal using the above-described apparatus according to an exemplary embodiment of the present invention is described below.

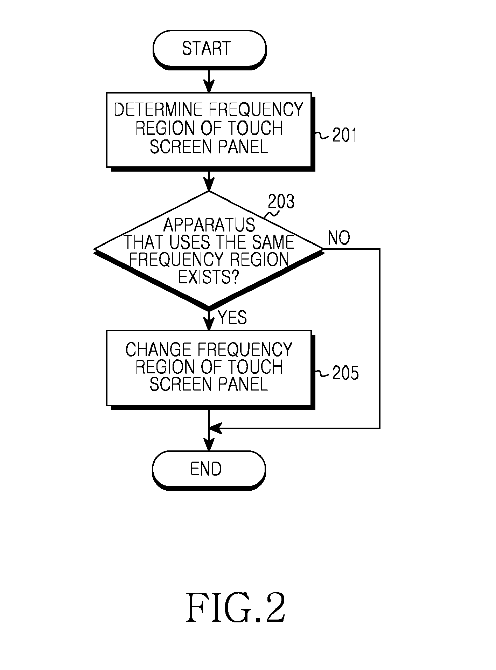

FIG. 2 is a flowchart illustrating a process for removing an EMI in a mobile terminal according to an exemplary embodiment of the present invention.

Referring to FIG. 2, the mobile terminal is intended for reducing an EMI that occurs when a multiplied frequency region of a frequency generated upon channel sensing of a touch screen panel overlaps a frequency region received by a receiver.

The mobile terminal for reducing the EMI determines a frequency region of a touch screen panel in step 201.

Here, when a touch by a finger or other input occurs or power is supplied to the touch screen panel, a frequency of several MHz is generated by the touch screen panel. Furthermore, a frequency region of the touch screen panel denotes a multiplied frequency of the frequency generated by the touch screen panel.

The mobile terminal determines whether an apparatus that uses a frequency region of the touch screen panel determined in step 201 exists in step 203. Here, the fact that an apparatus that uses the frequency region of the touch screen panel exists denotes that a multiplied frequency region of the frequency that occurs from the touch screen panel overlaps a frequency region received by a receiver, so that an EMI may occur.

If it is determined in step 203 that an apparatus that uses the frequency region of the touch screen panel does not exist, the mobile terminal uses the frequency of the touch screen panel as in the conventional mobile terminal, and then ends the present algorithm.

In contrast, if it is determined in step 203 that an apparatus that uses the frequency region of the touch screen panel does exist, the mobile terminal sets the frequency region of the touch screen panel to a region that is not used by the apparatus in step 205.

That is, according to an exemplary embodiment of the present invention, the mobile terminal divides a frequency region of the touch screen panel into two or more regions, and uses a frequency region of the touch screen panel that is different from the frequency region of the receiver. Assuming that the mobile terminal divides the frequency region of the touch screen panel into a region A and a region B, and the receiver receives a frequency corresponding to the region A, when a multiplied frequency region of the frequency of the touch screen panel corresponds to the region A, the mobile terminal sets the frequency region of the touch screen panel to the region B so that the two frequency regions do not overlap each other, thereby preventing or otherwise reducing an EMI from occurring.

After that, the mobile terminal ends the present algorithm.

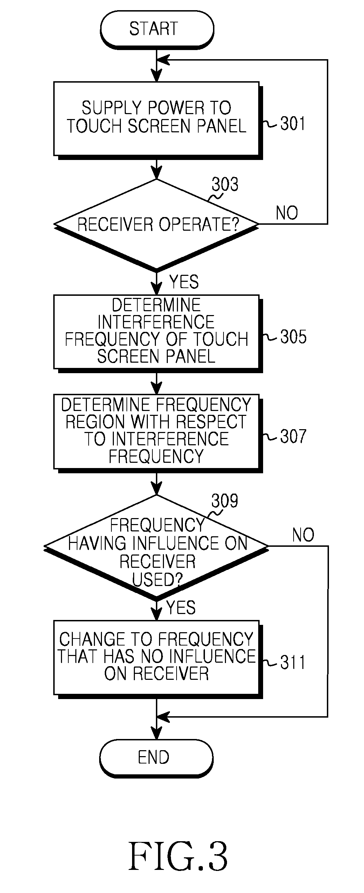

FIG. 3 is a flowchart illustrating a process for reducing an EMI in a mobile terminal according to an exemplary embodiment of the present invention.

Referring to FIG. 3, as described above, the mobile terminal is intended for reducing an EMI that occurs when a multiplied frequency region of a frequency generated upon channel sensing of a touch screen panel overlaps a frequency region received by a radio receiver.

The mobile terminal for reducing the EMI supplies power to the touch screen panel to operate the touch screen panel in step 301. As the power is supplied to the touch screen panel, a frequency of several MHz occurs when a touch by a finger or other input occurs or even when the touch does not occur.

The mobile terminal determines whether the radio receiver operates in step 303.

If it is determined that the radio receiver does not operate in step 303, the mobile terminal re-performs the process of step 301.

In contrast, if it is determined that the radio receiver operates in step 303, the mobile terminal determines an interference frequency of the touch screen panel in step 305.

Here, the interference frequency of the touch screen panel denotes a multiplied frequency of the frequency that occurs from the touch screen panel, and may be an integer multiple of a clock of a sensing channel of the touch screen panel. Additionally, the interference frequency of the touch screen panel may include an interference frequency besides the multiplied frequency, and denotes a frequency that generates an EMI to the radio receiver.

The mobile terminal determines a set frequency region with respect to the interference frequency in step 307.

Here, according to an exemplary embodiment of the present invention, the mobile terminal divides a frequency region of the touch screen panel into a plurality of regions and uses them depending on the interference frequency. The mobile terminal may determine the set frequency region, which is a frequency region that can avoid the EMI, using an interference frequency table as illustrated in Table 1.

**Table 1**

| Interference frequency | Set frequency region |
|---|---|
| Integer multiple of a frequency | Region A |
| (an integer multiple of a sensing channel) | |
| Otherwise | Region B |

That is, when the interference frequency is an integer multiple (an integer multiple of a sensing channel) of a frequency that occurs from the touch screen panel, the mobile terminal uses the region A. When the interference frequency is not an integer multiple (an integer multiple of the sensing channel) of the frequency that occurs from the touch screen panel, the mobile terminal uses the region B.

The mobile terminal determines whether the touch screen panel uses a frequency that has an influence on the radio receiver in step 309.

Here, using a frequency that has an influence on the radio receiver denotes that the set frequency with respect to the interference frequency overlaps the radio frequency. In this case, an EMI may occur.

If it is determined in step 309 that the frequency that has an influence on the radio receiver is not used, the mobile terminal uses the frequency of the touch screen panel as in the conventional mobile terminal, and then ends the present algorithm.

In contrast, if it is determined in step 309 that the frequency that has an influence on the radio receiver is used, the mobile terminal changes the frequency of the touch screen panel to a frequency that has no influence on the receiver in step 311.

For example, after setting the frequency of the touch screen panel by an interference frequency to a region A and driving the touch screen panel, when receiving a radio broadcast whose frequency overlaps the frequency A, the mobile terminal changes the frequency of the touch screen panel to a frequency B to reduce an EMI.

That is, the mobile terminal divides a frequency region of the touch screen panel into a plurality of regions, and uses a frequency of the touch screen panel that is different from the radio frequency.

After that, the mobile terminal ends the present algorithm.

In the above, a method for reducing an EMI by setting a frequency of a touch screen panel to a set frequency by an interference frequency using an interference frequency table to drive the touch screen panel, and when a received radio frequency is the same as the frequency of the touch screen panel set in advance, changing the frequency of the touch screen panel in a mobile terminal according to an exemplary embodiment of the present invention has been described.

However, according to an exemplary embodiment of the present invention, the mobile terminal may change the frequency of the touch screen panel using a received radio frequency and an interference frequency table illustrated in Table 2.

**Table 2**

| Interference frequency | Frequency of the touch screen panel |
|---|---|
| Integer multiple of a sensing channel | A → B or B → A |

That is, when the radio frequency received by the mobile terminal is the same as a frequency corresponding to an integer multiple of a sensing channel, the mobile terminal determines that the EMI may occur and changes the current set frequency of the touch screen panel from the frequency A to the frequency B, or from the frequency B to the frequency A.

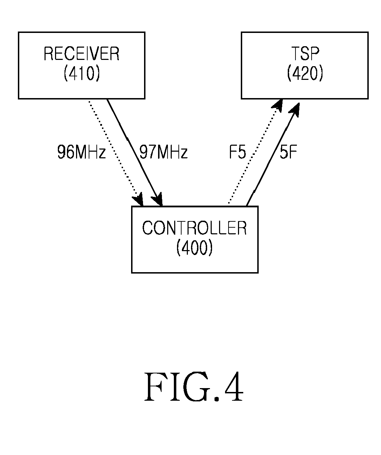

FIG. 4 is a view illustrating a process for reducing an EMI by changing a frequency of a touch screen panel in a mobile terminal according to an exemplary embodiment of the present invention.

Referring to FIG. 4, when determining that a frequency of a radio receiver 410 is about 96 MHz, a controller 400 of the mobile terminal uses F5 as a frequency of a touch screen panel 420 so that the frequency of the radio receiver 410 may not be the same as the frequency of the touch screen panel.

Additionally, when determining that the frequency of the radio receiver 410 is about 97 MHz, the controller 400 of the mobile terminal prevents interference from occurring between the two frequencies by using 5F as the frequency of the touch screen panel 420. At this point, the mobile terminal sets and stores in advance the frequency of the touch screen panel 420 with respect to the frequency of the radio receiver 410.

As described above, exemplary embodiments of the present invention provide an apparatus and a method for reducing an EMI occurring when a multiplied frequency of a frequency occurring from the touch screen panel overlaps a frequency of a radio receiver. The apparatus and method may allow the frequencies not to overlap each other by dividing a frequency region of the touch screen panel into a plurality of regions, and changing a frequency of the touch screen panel depending on a received radio frequency.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. An apparatus for reducing an Electro Magnetic Interference (EMI) in a mobile terminal, the apparatus comprising:
a frequency changing unit (102) for dividing a frequency region of a touch screen panel into two or more regions, and for changing the frequency region of the touch screen panel.

2. The apparatus of claim 1, wherein, when determining that a receiver that uses the same frequency as a frequency region of the touch screen panel operates, the frequency changing unit (102) changes the frequency of the touch screen panel to a different frequency region.

3. The apparatus of claim 1, wherein a frequency of the touch screen panel comprises a multiplied frequency of a frequency generated from the touch screen panel, and comprises an interference frequency besides the multiplied frequency.

4. The apparatus of claim 1, wherein the frequency region of the touch screen is divided into two or more regions as illustrated in the following table:
| Interference frequency | Set frequency region |
|---|---|
| Integer multiple of a frequency | Region A |
| (an integer multiple of a sensing channel) | |
| Otherwise | Region B |

5. The apparatus of claim 1, wherein the frequency region of the touch screen is divided into two or more regions as illustrated in the following table:
| Interference frequency | Frequency of the touch screen panel |
|---|---|
| Integer multiple of a sensing channel | A → B or B → A |

6. A method for reducing an Electro Magnetic Interference (EMI) in a mobile terminal, the method comprising:
dividing a frequency region of a touch screen panel into two or more regions; and
changing the frequency region of the touch screen panel.

7. The method of claim 6, further comprising, when determining that a receiver that uses the same frequency as a frequency region of the touch screen panel operates, changing the frequency of the touch screen panel to a different frequency region.

8. The method of claim 6, wherein a frequency of the touch screen panel comprises a multiplied frequency of a frequency generated from the touch screen panel, and comprises an interference frequency besides the multiplied frequency.

9. The method of claim 6, wherein the frequency region of the touch screen is divided into two or more regions as illustrated in the following table:
| Interference frequency | Set frequency region |
|---|---|
| Integer multiple of a frequency | Region A |
| (an integer multiple of a sensing channel) | |
| Otherwise | Region B |

10. The method of claim 6, wherein the frequency region of the touch screen is divided into two or more regions as illustrated in the following table:
| Interference frequency | Frequency of the touch screen panel |
|---|---|
| Integer multiple of a sensing channel | A → B or B → A |
